# EUROPEAN PATENT APPLICATION

(11) **EP 2 264 850 A2**
(43) Date of publication of application: **22.12.2010**
(21) Application number: 09008950.9
(22) Date of filing: 09.07.2009
(51) Int. Cl.: H02H 7/08, H02H 3/247, H02H 3/04

(54) **Thermal overload relay with trip classification**

(30) Priority: 19.06.2009 EP 09008014
(71) Applicant: ABB AG, 68309 Mannheim (DE)
(72) Inventor: Andenna, Andrea, 5405 Baden Daetwill (CH); Müller, Peter O., 69221 Dossenheim (DE); Ukil, Abhisek, 5404 Baden (CH)

(57) **Abstract**

The invention is about an overload protection device (30) to protect an electric load (20), especially an induction motor (20), in a load circuit made up by an electric supply line (A) providing a load current and the electric load (20), the device comprising first means (31) for deriving a load current measurement signal (311) and second means (33) for deriving an overload indicator signal (331) based on the load current measurement signal (311), wherein said overload protection device (30) further comprises a voltage sag identification circuit (34) for deriving a voltage sag indicator signal (341) based on the occurrence of short-termed supply voltage drops.

The invention is further about a method to be used with such an overload protection device.

## Description

The invention is about an overload protection device to protect an electric load, especially an induction motor, in a load circuit made up by an electric supply line providing a load current and the electric load, the device comprising first means for deriving a load current measurement signal, and second means for deriving an overload indicator signal based on the load current measurement signal, according to the preamble of claim 1.

The invention is further about a motor controller, providing motor control and motor protection functions, comprising such an overload protection device.

Even further the invention is about a method to be used with an overload protection device to protect an electric load, especially an induction motor, in a load circuit made up by an electric supply line providing a load current and the electric load, the device comprising first means for deriving a load current measurement signal, and second means for deriving an overload indicator signal based on the load current measurement signal.

Finally the invention is about a computer program and a computer program product with program code configured to execute such a method, if the program is run on a computer or microprocessor.

A low voltage overload protection device, also called overload protection relay, protects an industrial motor, for example an induction motor, against possible overloads, excessive overcurrent etc.

Examples for electronic overload relays are shown in DE 197 48 627 A1 and EP 0 477 959 A2. The electronic overload relays shown there comprise a microprocessor, which includes in its application program the thermal model and which calculates the motor temperature from the measurement signal of motor current and time.

An intelligent motor controller, like the product sold by the company ABB under the product name Universal Motor Controller UMC22, or other motor controllers, comprises an electronic overload relay and offers motor protection and motor control functions of fixed speed motors in one device. Such motor controllers are frequently integrated in a process control system with the help of a fieldbus connection, e.g. the so-called Modbus. Via such a connection the control system can control the motor from remote and can also read out diagnosis information, e.g. the number of protection trips. Because of their features intelligent motor controllers are often used in applications where unplanned downtimes can be very costly, for example in the chemical or petrochemical process industry.

Intelligent motor controllers protect all sizes of standard motors with nominal currents ranging from e.g. 240mA to up to 850A. Usually they are installed in so called motor control centers and in larger plants hundreds of them might be used. Therefore their design is very cost sensitive and optimized for low cost.

The overload protection in low voltage overload protection relays is typically done by measuring the motor current and judging how much it is more than the nominal current. A thermal model algorithm calculates the thermal load and checks whether or not it surpasses a certain threshold based on the nominal current.

However, due to supply-side problems like start of big motors, power systems faults etc, there might be voltage sags. During voltage sags, the supply voltage drops for some short duration. Voltage sags can also be termed as dips, cusps, interruptions etc. They are brief reductions in voltage magnitude, lasting from a cycle, 20ms for a 50Hz system, up to a minute. As a consequence, the motor current increases, which can be of similar level like an overcurrent due to overload. Whereas an overcurrent due to overload has its origin in the process the motor is part of, an overcurrent in the voltage sag case has its origin on the supply side. In both cases, the overload protection relay operates and causes a tripping action to protect the motor. The operator however does not know, why the overload protection relay has initiated a tripping action, if due to a process problem or due to a supply-side problem. If the operator after a tripping event wants to find out about the origin of said trip, he would need to apply further analysis instruments or methods to find out if there was a supply side problem or if there is a motor problem, which turns the reaction to a tripping event complicated and time consuming.

Based on the known prior art it is an objective of the present invention to further improve an electronic overload protection device so that it gives to the operator an information about the origin of the fault in case of a tripping event.

It is a further objective of the present invention to provide an improved motor controller, providing motor control and motor protection functions, so that it additionally provides to the operator an information about the origin of the fault in case of a tripping event.

It is an even further objective of the present invention to provide a method to be used with an overload protection device allowing to produce an information about the origin of the fault in case of a tripping event.

Finally it is an objective of the present invention to provide a computer program and a computer program product with program code configured to execute the method to be used with an overload protection device allowing to produce an information about the origin of the fault in case of a tripping event.

The invention consists in an overload protection device mentioned in the preamble of claim 1 that further comprises a voltage sag identification circuit for deriving a voltage sag indicator signal based on the occurrence of short-termed supply voltage drops, and an overload classification circuit for deriving an overload origin specification signal determining the cause of an overload based on said load current measurement signal, said overload indicator signal and said voltage sag indicator signal.

An overload protection device according to the invention can classify trips as to whether they are due to overload coming from the process side, e.g. the motor, or from the supply side, e.g. voltage sags. In other words, it enables the overload protection device to differentiate the cause of an overcurrent trip, that means the overload protection device can indicate whether the overcurrent was caused by process overload or by a supply-side problem like voltage sags. In the latter case, i.e. the voltage sag, the operator would get the information that the trip is not due a problem with the motor, and he would not need to worry about the process side. An adventage of incorporating such an automatic trip classification it to help the maintenance personnel to quickly identify and react to the alarm and trip signals, which will reduce the troubleshooting times and hence the maintenance efforts. With known overload protection devices the operator would not know where is the origin of a trip.

In accordance with one feature of the invention, said voltage sag identification circuit comprises a voltage measuring circuit for measuring the supply voltage and a voltage drop analysing circuit for determining amount and duration of a supply voltage drop and to generate the voltage sag indicator signal.

In accordance with another feature of the invention said overload protection device further comprises a voltage sag classification circuit for determining a sag classification signal based on the voltage sag indicator signal.

In accordance with another feature of the invention said voltage sag identification circuit comprises a current pattern analysing circuit for determining the voltage sag indicator signal based on an analysis of the stator current pattern of an induction motor operating under a voltage sag.

In accordance with another feature of the invention the current pattern analysing circuit comprises a current magnitude monitoring circuit.

In accordance with another feature of the invention the current pattern analysing circuit comprises a phase angle change monitoring circuit.

In accordance with another feature of the invention the current pattern analysing circuit comprises a zero crossing analysing circuit.

In accordance with another feature of the invention said overload protection device further comprises a sag information storing means.

In accordance with another feature of the invention said overload protection device further comprises a voltage sag indicator display.

The invention further consists of a motor controller, providing motor control and motor protection functions, comprising an overload protection device to protect an electric load, especially an induction motor, in a load circuit made up by an electric supply line providing a load current and the electric load, the device comprising first means for deriving a load current measurement signal, and second means for deriving an overload indicator signal based on the load current measurement signal, that further comprises a voltage sag identification circuit for deriving a voltage sag indicator signal based on the occurrence of short-termed supply voltage drops, and an overload classification circuit for deriving an overload origin specification signal determining the cause of an overload based on said load current measurement signal, said overload indicator signal and said voltage sag indicator signal.

The invention further consists of a method to be used with an overload protection device to protect an electric load, especially an induction motor, in a load circuit made up by an electric supply line providing a load current, and the electric load, the device comprising first means for deriving a load current measurement signal, and second means for deriving an overload indicator signal based on the load current measurement signal, the method further comprising the steps of identifying the occurrence of short-termed supply voltage drops, producing a voltage sag indicator signal depending on the occurrence of short-termed supply voltage drops, producing an overload origin specification signal based on said load current measurement signal, said overload indicator signal and said voltage sag indicator signal, determining the cause of an overload.

Finally the invention consists of a computer program and a computer program product with program code configured to execute a method to be used with an overload protection device to protect an electric load, especially an induction motor, in a load circuit made up by an electric supply line providing a load current and the electric load, the device comprising first means for deriving a load current measurement signal, and second means for deriving an overload indicator signal based on the load current measurement signal, the method comprising the steps of identifying the occurrence of short-termed supply voltage drops, producing a voltage sag indicator signal depending on the occurrence of short-termed supply voltage drops, producing an overload origin specification signal based on said load current measurement signal, said overload indicator signal and said voltage sag indicator signal, determining the cause of an overload, if the program is run on a computer or microprocessor. The program would according to the invention be run as part of the application program of the microprocessor within the electronic overload protection device.

The invention is now described in more detail with reference to embodiments thereof given by way of example and shown in the appended drawings.

### Brief description of the drawings

- Fig. 1: is a block diagram of a load circuit made up by an electric supply line, a motor, a contactor and an overload protection device,
- Fig. 2: is a block diagram of an electronic overload protection device according to a first embodiment of the invention,
- Fig. 3: is a block diagram of an electronic overload protection device according to a further embodiment of the invention,
- Fig. 4 a: is an example of a voltage curve with a voltage sag,
- Fig. 4b: is an example of the current curve corresponding to the voltage curve of fig. 4a.

### Detailed description of the preferred embodiments

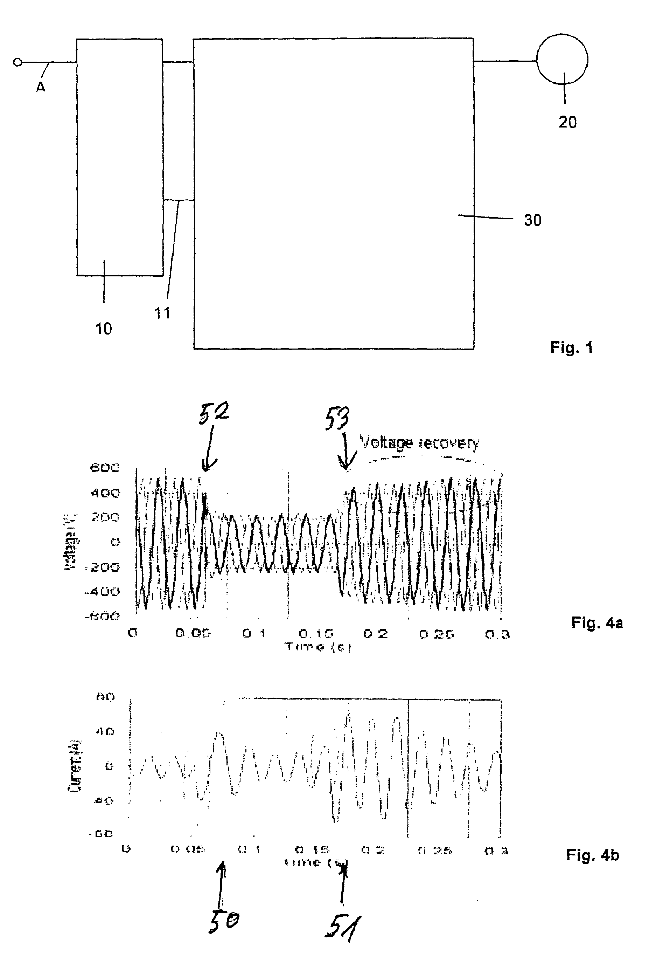

With initial reference to figure 1, a load circuit is shown made up by an electric supply line A providing a load current and an electric load 20. The supply line A is coupled to a source of alternating electricity (not shown). The single supply line A is shown representing a single phase or a three phase system. The functionality of the overload protection device would not be affected by the application in a three phase electrical system.

The supply line A is connected to a load in form of a motor 20 by a contactor 10 and an overload protection device 30. In case of a three phase system the motor 20 is a fixed speed motor, also described as induction motor, and in principle known since long time. The contactor has an internal set of contacts (not shown) coupling the supply line to the overload protection device and the motor. The contactor receives an activation signal via a signal line 11 from the overload protection device 30. The signal line 11 can be an electric signal path or a mechanical coupling. In case the overload protection device 30 detects an overload situation, it transmits an activation signal to the contactor, as a result of which the internal contacts of the contactor are activated to interrupt the power supply to the motor 20. Of course other embodiments of motor protection are possible, for example the contactor functionality could be integrated into the overload protection device.

In the power supply so-callled voltage sags may occur. Voltage sags are mainly caused by abrupt increases in loads such as start-ups of high power motors, short circuits or faults, and also open circuits. Commonly there are three parameters to characterize voltage sags: the sag depth or magnitude, the sag duration, and the phase deviation.

The sag depth is mostly defined as the remaining root mean square (RMS) value of the voltage magnitude referring to the nominal voltage, during a sag event. Sometimes it may be considered as the real depth of the lost voltage, for example in the IEC (International Electrotechnical Commission) standards.

The duration of a voltage sag is defined as the time period between the beginning of the voltage drop, and the beginning of the voltage recovery to the level before the sag. It can be measured in time or in cycles. Longer periods of low voltage are referred to as "undervoltage".

The phase shift has been proposed as an additional parameter for characterizing voltage sags, for example in J. Pedra et al., "Effects of symmetrical voltage sags on squirrel-cage induction motors", Electric Power Systems research 77:1680, 2007.

Voltage sags can be classified as balanced or unbalanced sags. Balanced sags only occur when both the depth and the duration of three-phase voltage sags are the same, plus no phase angle changes. The standard of the IEEE, standard 1159-1995, categorizes voltage with magnitude lower than nominal level as sags. An interruption is considered as an extreme case of voltage sag. It usually refers to voltage sags with extremely low or zero magnitude. The IEEE 1159 standrad defines the magnitude of interruptions as less than 10% of the nominal voltage, while the IEC 61000-4-11 standard defines an interruption as less than 5% of the nominal voltage. According to their durations, sags and interruptions are classified as instantaneous, momentary or temporary events.

Generally, induction machine behaviour is greatly affected by voltage sags. Typical effects are torque variation, current inrush, and motor decelaration.

Figures 4a and 4b show a voltage sag and the induction machine stator current behaviour during the sag. The test was undertaken using a 5.5kW, 380V, 50 Hz and 1450 rpm three-phase induction motor. Two current inrushes 50, 51 can be observed at the voltage sag onset 52 and voltage recovery point 53. Experimental tests also show the current inrush 51 at the voltage recovery point 53 has a higher magnitude than the current inrush 50 at the voltage sag onset point 52.

A phase angle shift of the stator current occurs both at the beginning 52 and at the ending 53 of a voltage sag, just before the current inrushes. It can also be seen that in the post-sag period, due to the high current drawn during the restoring of the motor speed, voltage does not recover to the same level as before the sag as soon as the sag ends, but increases gradually. This actually lengthens the time of overcurrent. Motor overcurrent protection devices will, depending on the pre-set classes and tripping levels of the device, trip during this period.

The nature of the voltage and current waveforms during voltage sags make it possible to detect a voltage sag using an electronic overload protection device.

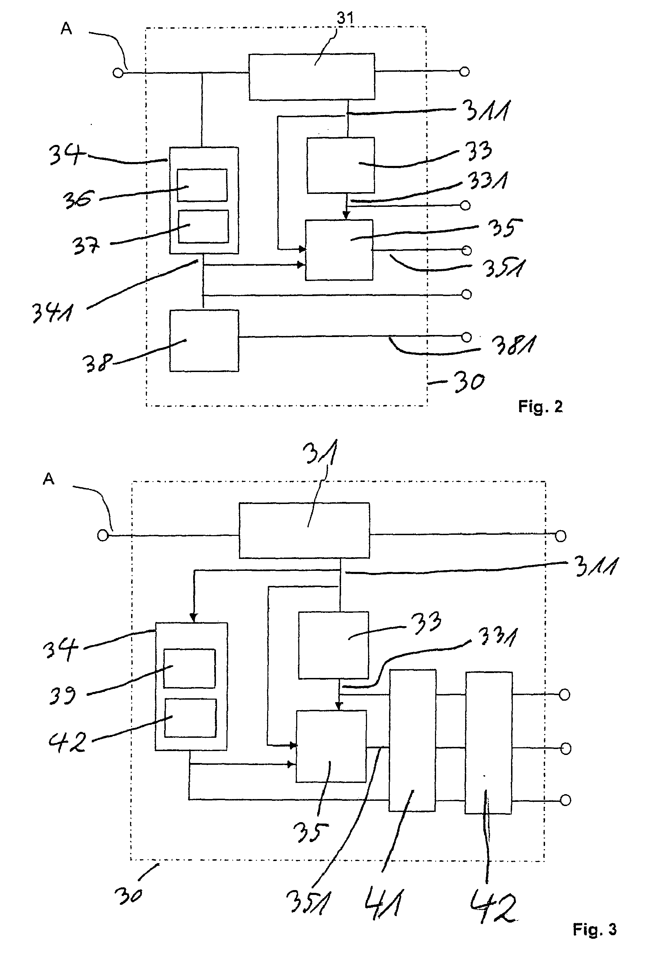

Fig. 2 shows a block diagram of an electronic overload protection device 30 according to a first embodiment of the invention. The supply line A enters and leaves the device 30 at input and output connection terminals. In between them there are first means for deriving a load current measurement signal 311. The first means may be known current measurement electronic circuitry combined with digital signal processing, implemented by using a microprocessor (not shown explicitly in the figure). Second means 33 are there for deriving an overload indicator signal 331 based on the load current measurement signal 311. The second means 33 can be a thermal model algorithm implemented as a module within the application program of the microprocessor.

Additionally, there is a voltage sag identification circuit 34 for deriving a voltage sag indicator signal 341. The voltage sag identification circuit 34 produces a voltage sag indicator signal 341 based on the occurrence of short-termed supply voltage drops. The sag indicator signal 341 is basically a pre-processed supply voltage measurement. To detect a voltage sag, the voltage sag identification circuit 34 comprises a voltage measuring circuit 36, being for example voltage sensors. They measure the voltage curve of the voltage on the supply line. A voltage drop analysing circuit 37 determines if a voltage sag occurs. The voltage drop analysing circuit 37 can be an algorithm being a module of the application program of the microprocessor, analysing the voltage curve an detecting times when the voltage decreases significantly below its nominal value.

The voltage signal is fed additionally to a voltage sag classification circuit 38, which produces a sag classification signal 381. This algorithm is designed to specify what kind of sag it is, based on the voltage drop measurement and a sag duration measurement, and classifying the sags detected due one of several existing standards, for example the IEEE 1159-1995, IEC 61000-4-11, IEC 61000-4-34, EN 50160 81999) or the SEMI F47-0706 standard. For example, if the voltage drop is about 70% of the nominal value and lasting for 10 - 500 ms, one can set the supply-side reason "true" and additionally mention "IEEE 1159 momentary interruption". An overcurrent occurring now would be due to a supply-side based voltage interruption, not due to a process problem in the motor. In an advantageous embodiment, the choice of the underlying standard can be optional and set manually by the operator, depending on the country of operation, type of application etc. All relevant standards will be stored in the voltage sag classification circuit, for example in the memory of the microprocessor.

An automatic trip classification is being performed by using an overload classification circuit 35, also called a trip classification algorithm. The overload classification circuit takes as input the voltage sag indicator signal 341, which is a pre-processed voltage measurement signal, the overload indicator signal 331 and the load current measurement signal 311. It will derive the cause for a trip based on those measurements, and following decision rules that have been pre-set into the overload classification circuit 35. For example, if there is an overload current, shown by the overload indicator signal 331, but no sag, i.e. no sag indication by the sag voltage indicator signal 341, the overload origin specification signal 351 would indicate a process side reason for the overcurrent tripping.

The voltage sag indicator signal 341, the overload indicator signal 331 and the overload origin specification signal 351 could be realized as digital flags, switching between a "true" and "false" status. So the overload specification circuit could be realized as a kind of decision table. For example, signal 331 being "true" and signal 341 being "false", then signal 351 would be "true" for "process side" and "false" for supply side". If signal 331 is "true" and signal 341 is also "true", then signal 351 would be "true" for "process side" and "true" for "supply side", and the operator would know that there is a supply side problem.

Figure 2 shows another embodiment of an overload protection device according to the invention. Identical or equivalent parts or sub-units have the same reference numerals as in fig. 1. Here in fig. 2 the voltage sag identification circuit 34 has a current processing circuit 39 and a current pattern analysing circuit 42, which are fed with the load current measurement signal 311 and determines the voltage sag indicator signal 341 based on the analysis of the current signal.

The detection of voltage sags using the current signal is possible because of the unique stator current pattern if an induction machine is operating under a voltage sag. The current processing circuit 39 senses the stator current of the motor and provides either a rectified current signal or zero-crossings of the current signal to the pattern analyzing circuit 42.

By using the rectified stator current, a detection of voltage sags may be achieved by monitoring the current peak or phase angle change, see fig. 4a and 4b. Current magnitude monitoring may be applied using the two current inrushes 50, 51 during a short time, as well as the anomaly of the magnitude between the two inrushes 50, 51 and the start-up-like overcurrent after the second inrush 51.

Phase angle change has been observed in the real current signal of the stator current. The detection of voltage sags on induction machines may be achieved by checking the time period between two successive current peaks. In both the beginnings 52 of a voltage sag and voltage recovery 53 the time period between two successive current peaks becomes inconsistent. This angle change can also be accompanied by the detection of magnitude peaks to get higher credibility.

The determination of a voltage sag based on detection of zero crossings is working like this: In normal conditions, the time period between two successive current zero crossing points is constant, which is 100 ms for single phase current and 33.33 ms for three-phase current. In the case of a voltage sag, the zero-crossing signal will become inconsistent both at the beginning 52 and the recovery 53 of the voltage. By detecting such changes in the zero-crossing signal, voltage sags may be identified.

The device shown in fig. 2 has additionally a sag information storing means 41. In case of a voltage sag, the sag and tripping classification information, like the voltage drop level, duration, sag type etc., can be stored in the storing means 41. This type of storing or log is helpful, for example, to accurately inform associated utilities about the supply side problems.

Another sub-unit shown in the embodiment of fig. 2 is a voltage sag indicator display 40. This is used for displaying the voltage sag and tripping classification information. The display can be done either on the device panel, so the operator can see it whan looking at the device, or it can be a remote display, e.g. integrated in a distributed control system or an asset monitoring system.

List of reference numerals
- A: Supply line
- 10: contactor
- 11: signal line
- 20: motor
- 30: electronic overload protection device
- 31: first means
- 33: second means
- 34: voltage sag identification circuit
- 35: overload classification circuit
- 36: voltage measuring circuit
- 37: voltage drop analysing circuit
- 38: voltage sag classification circuit
- 39: current processing circuit
- 40: voltage sag indicator display
- 41: sag information storing means
- 42: current pattern analysing circuit
- 50: current inrush
- 51: current inrush
- 52: voltage sag onset
- 53: voltage recovery point
- 311: load current measurement signal
- 331: overload indicator signal
- 341: voltage sag indicator signal
- 351: overload origin specification signal
- 381: sag classification signal

## Claims

1. Overload protection device (30) to protect an electric load (20), especially an induction motor (20), in a load circuit made up by an electric supply line (A) providing a load current and the electric load (20), the device comprising
- first means (31) for deriving a load current measurement signal (311),
- second means (33) for deriving an overload indicator signal (331)
based on said load current measurement signal (311),
wherein said overload protection device (30) further comprises
- a voltage sag identification circuit (34) for deriving a voltage sag indicator signal (341) based on the occurrence of short-termed supply voltage drops, and
- an overload classification circuit (35) for deriving an overload origin specification signal (351) determining the cause of an overload based on said load current measurement signal (311), said overload indicator signal (331) and said voltage sag indicator signal (341).

2. A device according to claim 1, wherein said voltage sag identification circuit (34) comprises a voltage measuring circuit (36) for measuring the supply voltage and a voltage drop analysing circuit (37) for determining amount and duration of a supply voltage drop and to generate the voltage sag indicator signal (341).

3. A device according to claim 2, wherein said overload protection device further comprises a voltage sag classification circuit (38) for determining a sag classification signal (381) based on the voltage sag indicator signal (341).

4. A device according to claim 1, wherein said voltage sag identification circuit (34) comprises a current pattern analysing circuit (39) for determining the voltage sag indicator signal (341) based on an analysis of the stator current pattern of an induction motor (20) operating under a voltage sag.

5. A device according to claim 4, wherein the current pattern analysing circuit (39) comprises a current magnitude monitoring circuit.

6. A device according to claim 4, wherein the current pattern analysing circuit (39) comprises a phase angle change monitoring circuit.

7. A device according to claim 4, wherein the current pattern analysing circuit (39) comprises a zero crossing analysing circuit.

8. A device according to claim 1, wherein said overload protection device (30) further comprises a sag information storing means (41).

9. A device according to claim 1, wherein said overload protection device (30) further comprises a voltage sag indicator display (40).

10. Motor controller, providing motor control and motor protection functions, comprising an overload protection device (30) according to one of claims 1 to 9.

11. A method to be used with an overload protection device (30) to protect an electric load (20), especially an induction motor (20), in a load circuit made up by an electric supply line (A) providing a load current and the electric load (20), the device comprising first means (31) for deriving a load current measurement signal (311), and second means (33) for deriving an overload indicator signal (331) based on the load current measurement signal (311), the method comprising the steps of:
o Identifying the occurrence of short-termed supply voltage drops,
o producing a voltage sag indicator signal (341) depending on the occurrence of short-termed supply voltage drops,
o producing an overload origin specification signal (351) based on said load current measurement signal (311), said overload indicator signal (331) and said voltage sag indicator signal (341), determining the cause of an overload.

12. The method according to claim 11, wherein, the supply voltage is measured and the amount and duration of a supply voltage drop is detected and the voltage sag indicator signal (341) is generated based on said amount and duration of said detected supply voltage drop.

13. The method according to claim 11, wherein the stator current pattern of an induction motor (20) operating under a voltage sag is analysed and the voltage sag indicator signal (341) is determined based on said analysis of said current pattern.

14. Computer program with program code configured to execute the method according to claim 12, if the program is run on a computer or microprocessor.

15. Computer program product with program code configured to execute the method according to claim 12, if the program is run on a computer or microprocessor.
